Europäisches Patentamt

European Patent Office

Office européen des brevets

(19)

(11) Veröffentlichungsnummer: **0 211 389**

**A2**

(12) # EUROPÄISCHE PATENTANMELDUNG

(21) Anmeldenummer: 86110510.4

(22) Anmeldetag: 30.07.86

(51) Int. Cl.⁴: **B29C 67/00** ,
//B29L23:00,B29L31:06,B29K10-5:06

(30) Priorität: 07.08.85 DE 3528307

(43) Veröffentlichungstag der Anmeldung:
**25.02.87 Patentblatt 87/09**

(84) Benannte Vertragsstaaten:
**AT BE CH DE FR GB IT LI NL SE**

(71) Anmelder: **Julius & August Erbslöh GmbH & Co.**
**Siebeneickerstrasse 235**
**D-5620 Velbert (Neviges)(DE)**

(72) Erfinder: **Möller, Bernhard, Dipl.-Ing.**
**Auf den Pöthen 45**
**D-5620 Velbert 15(DE)**

(74) Vertreter: **Mentzel, Norbert, Dipl.-Phys.**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Verfahren zur Herstellung eines Verbundprofilstabes.**

(57) Der Verbundprofilstab besteht aus einem Metall, insbesondere aus Alumiminium oder aus einer Aluminiumlegierung, und einem faserverstärkten Kunststoff. Zur Erhöhung der mechanischen Eigenschaften eines Profilstabes werden in offene oder geschlossene Kammern des Metallprofilstabes Kunststoffe in noch formbarem Zustand eingebracht und erhalten dort ihre endgültige Form und Lage.

FIG. 2

## Verfahren zur Herstellung eines Verbundprofilstabes

Die Erfindung betrifft ein Verfahren zur Herstellung eines Verbundprofilstabes aus Metall, insbesondere aus Aluminium oder Aluminiumlegierungen, und einem faserverstärkten Kunststoff.

Es ist bekannt, Verbundprofilstäbe herzustellen, bei denen der metallische Teil wenigstens bereichsweise mit einem Kunststoff umkleidet wird. Derartige Umkleidungen haben den Zweck. die Metalloberfläche zu schützen, aus optischen Gründen zu überdecken und können überdies ausschließliche oder zusätzliche isolierende Funktion haben. In der Regel sind derartige Kunststoffumkleidungen jedoch frei von eingelagerten Fasern und tragen nicht zur Stabilität des Verbundprofilstabes bei.

Es ist jedoch auch bekannt, Verbundprofile herzustellen, die der Steigerung der Stabilität eines solchen als tragenden Bauteil verwendeten Verbundprofiles dienen, indem auf die Oberfläche von Metallprofilen faserverstärkte Kunststoffleisten aufgeklebt werden. Derartige Verbundprofile haben jedoch den Nachteil, daß der Kunst stoff außenseitig aufgebracht ist und so einerseits den Profilquerschnitt vergrößert und andererseits Beschädigungen und Abnutzungen ausgesetzt ist.

Die Aufgabe der vorliegenden Erfindung besteht darin, einen Verbundprofilstab herzustellen, bei dem eine erhöhte Belastbarkeit des metallischen Profilstabes durch den Verbund mit Kunststoffen erzielt wird, ohne daß dies zu einer Vergrößerung der Profilabmessungen führt und wobei der Kunststoff vor Beschädigungen und Abnutzungen geschützt werden kann. Diese Aufgabe ist erfindungsgemäß dadurch gelöst, daß in offene oder geschlossene Kammern der Metallprofilstäbe mechanische Eigenschaften steigernde Kunststoffe in noch formbarem Zustand eingebracht werden und dort ihre endgültige Lage und Form erhalten.

Es ist denkbar, in den Kunststoff verschiedenartige Fasermaterialien, wie beispielsweise Glas, Aramid, Kohlenstoff od.dgl., einzubetten. Dabei mag es sich vorteilhaft um Langfasern handeln, deren Verlauf im Kunststoff vorteilhaft in der Richtung erfolgt, die der Beanspruchung des Profilstabes entspricht. Da viele Fälle statischer Beanspruchung solcher Verbundprofilstäbe darauf hinauslaufen, daß eine Beanspruchung auf Biegung, Knickung od.dgl. erfolgt, mag es vorteilhaft sein, wenn die Fasern in Profillängsrichtung verlaufen.

Als Kunststoffe, in welchen die Fasern eingelagert sind, lassen sich vorzugsweise Duroplaste oder Thermoplaste einsetzen.

Zur Erhöhung der Schubfestigkeit der Metall-Kusntstoff-Grenzschicht ist es vorteilhaft, wenn die in Anlage mit dem faserverstärkten Kunststoff bringbaren Flächen des Metallprofiles mechanisch oder chemisch aktiviert sind, wie dies beispielsweise durch Sandstrahlen, Schleifen, Bürsten, Rändeln als mechanische Verfahren und/oder durch Beizen, Chromatieren, Auftragen eines Haftvermittlers als chemische Verfahren geschehen kann.

Zur Erzielung eines festen Verbundes zwischen den metallischen Profilteilen und dem Kunststoffstrang ist es vorteilhaft, den Verbundprofilstab herzustellen, indem der das Fasermaterial enthaltende Kunststoffstrang in noch formbarem Zustand in einen Profilhohlraum eingebracht wird und im Profilhohlraum zur Aushärtung gelangt. Dabei ist es zur Erhöhung der Torsionsfestigkeit bzw. Torsionssteifigkeit und hoher Biegefestigkeit bzw. Biegesteifigkeit vorteilhaft, wenn der faserverstärkte Kunststoff durch Druckbeaufschlagung mit oder ohne Wärmezufuhr an die Innenwandung des Metallprofiles gepreßt wird. Dabei mag zum Aufbringen der Druckbeaufschlagung auf den, beispielsweise einen Hohlraum aufweisenden Kunststoffstrang vorteilhaft ein sich in Längsrichtung des Profilstabes erstreckender Druckschlauch oder Drucksack verwendet werden. Zum sicheren Anpressen des Kunststoffs an die Innenflächen des Metallprofilstabes auch bei Profilen verschiedenster Formen ist es vorteilhaft, einen Druckschlauch oder Drucksack zu verwenden, dessen Wanddicke nicht konstant, d.h. unterschiedlich ist. Zur Entfernung überschüssigen Harzes ist es vorteilhaft, wenn der Druckschlauch bzw. Drucksack von seinem Mittelbereich zu seinen Enden hin zunehmende Wanddicken aufweist und mit einem Druckmittel gefüllt wird, dessen Druck während der Aushärtungsphase des Kunststoffstranges aufrechterhalten wird. Dadurch wird vor der Aushärtungsphase ein Harz fluß im Laminat vom mittleren Profilbereich zu dessen offenen Enden hin erreicht. Zur Erzielung unterschiedlicher Wanddicken des faserverstärkten Kunststoffes ist es vorteilhaft, einen Druckschlauch bzw. Drucksack zu verwenden, der mit über seine Länge und/oder seinen Umfang unterschiedliche Wanddicken aufweist. Außerdem ist es denkbar, bedarfsweise den Metallprofilstab mit dem noch formbaren, faserverstärkten Kunststoff spanlos zu verformen.

Die Erfindung ist in Ausführungsbeispielen auf der Zeichnung dargestellt und wird nachfolgend näher erläutert. Es zeigen:

Fig. 1 das Ausführungsbeispiel eines Verbundprofilstabes mit zwei Hohlräumen, in welchen jeweils ein Fasermaterial umfassender Kunststoffstrang eingezogen ist.

Fig. 2 den aus Fig. 1 ersichtlichen Verbundprofilstab in seinem Querschnitt nach der Linie II-II von Fig. 1,

Fig. 3 einen rohrförmigen Verbundprofilstab, wobei das Metallrohr durch einen innenseitig angeordneten hohlen Kunststoffstrang ausgekleidet ist, in welchem sich ein den Kunststoffstrang an das Metallrohr pressender Druckschlauch befindet, in einem Längsschnitt nach der Linie III-III von Fig. 4,

Fig. 4 den aus Fig. 3 ersichtlichen rohrförmigen Verbundprofilstab in einem Querschnitt nach der Linie IV-IV von Fig. 3,

Fig. 5 einen rohrförmigen Verbundprofilstab im Querschnitt, der innenseitig bereichsweise mit faserverstärktem Kunststoff unterschiedlicher Wanddicke in bezug auf seinen Umfang beschichtet ist,

Fig. 6 einen Verbundprofilstab in einem Längsschnitt, der innenseitig mit faserverstärktem Kunststoff ausgekleidet ist, dessen Wanddicke in bezug auf die Profillänge unterschiedlich ist.

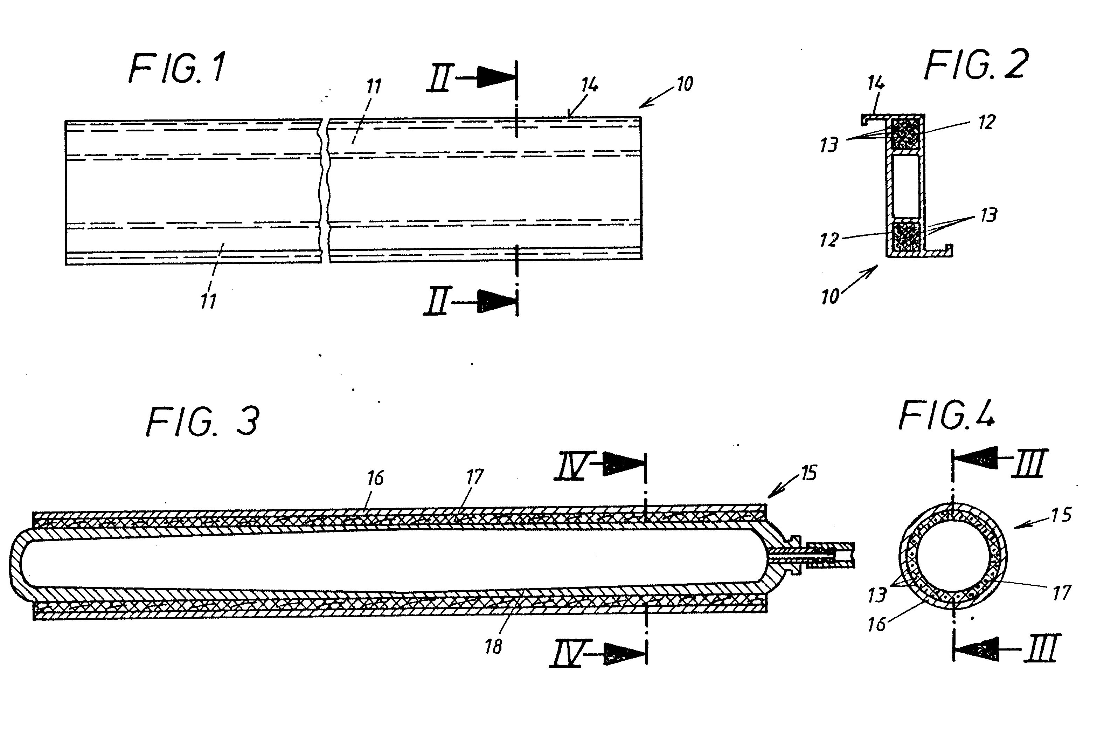

Der aus den Fig. 1 und 2 als Ausführungsbeispiel ersichtliche, verfahrensgemäß hergestellte Verbundprofilstab 10 weist zwei Hohlräume 11 auf, in welchen jeweils ein Kunststoffstrang 12 mit darin eingebettetem Fasermaterial eingezogen ist. Dieses Fasermaterial 13 besteht vorteilhaft aus Kohlenstoffasern, durch welche der Kunststoffstrang verstärkt ist. Dabei kann es sich bei dem das Fasermaterial umgebenden Kunststoff um einen Duro-oder Thermoplast handeln, wobei der das Fasermaterial 13 enthaltende Kunststoffstrang in noch formbarem Zustand in den Hohlraum 11 des Leichtmetallprofiles 14 eingebracht wird. Nach dem Erhärten des das Fasermaterial 13 enthaltenden Kunststoffstranges 12 ist einerseits ein fester Verbund zwischen dem Leichtmetallprofil 14 und dem jeweiligen Kunststoffstrang 12 hergestellt, und andererseits ver bessert der eine Eigenstabilität aufweisende Kunststoffstrang die statischen Eigenschaften des Verbundprofilstabes in hohem Maße.

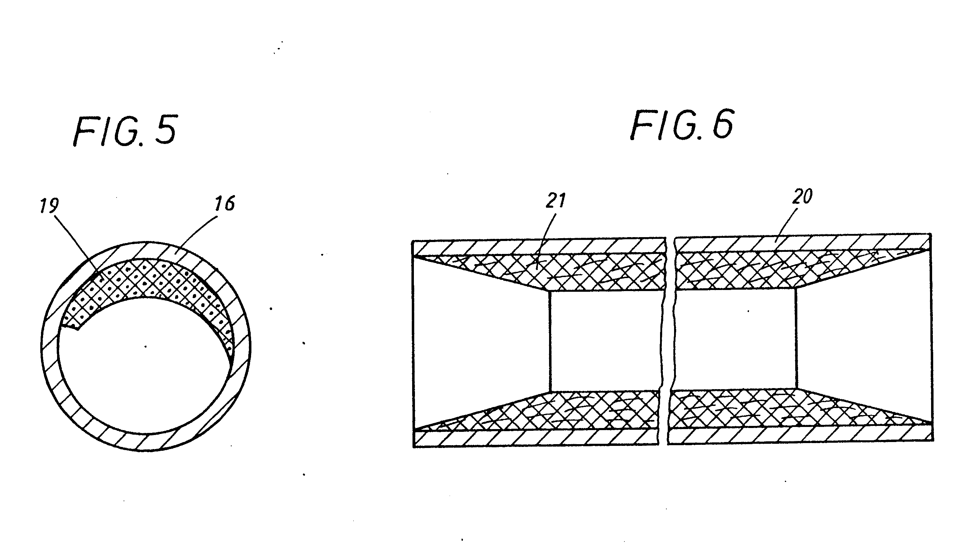

Bei dem aus den Fig. 3 und 4 ersichtlichen, verfahrensgemäß hergestellten Verbundprofilstab 15 handelt es sich um ein rohrförmiges Profil, das aus einem Metallrohr 16 und einem dieses innenseitig auskleidenden rohrförmigen Kunststoffstrang 17 besteht. Auch dieser Kunststoffstrang 17 ist von einem Fasermaterial 13 durchsetzt. Wie insbesondere aus Fig. 3 zu ersehen ist, wird der noch nicht erhärtete Kunststoffstrang 17 in das Metallrohr 16 eingesetzt und von einem durch ein Druckmittel aufblähbaren Schlauch 18 fest gegen die Innenwandung des Metallrohres 16 gepreßt. Um einen Harzfluß im Laminat von der Rohrmitte zu den offenen Enden hin zu erzielen, weist der Schlauch 18 im mittleren Längenbereich des Verbundprofilstabes 15 eine dünnere Wandung auf als in den beiden Schlauchendbereichen, die an den beiden Enden des Verbundrohres 15 plaziert sind. Wenn nun durch ein Druckmittel, wie beispielsweise Druckluft, der Schlauch 18 aufgeblasen wird, so wird sich zunächst dessen Mittelbereich nach außen formen, so daß der Kunststoffstrang 17 ebenfalls im mittleren Längenbereich des Verbundprofilstabes 15 sich an die Innenwandung des Metallrohres 16 festpreßt. Die äußeren Bereiche erfahren die Anpreßkraft verzögert, so daß tatsächlich ein Harzfluß von der Rohrmitte zu den offenen Enden hin erreichbar ist.

Bei dem in Fig. 5 im Querschnitt dargestellten, förmigen Verbundprofilstab ist das Metallrohr 16 innenseitig, in bezug auf seinen Umfang, bereichsweise mit einer durch Fasern 13 verstärkten Kunststoffaus kleidung 19 versehen. Diese Kunststoffauskleidung ist im Gegensatz zu dem aus Fig. 4 ersichtlichen Ausführungsbeispiel unterschiedlich dick. Es versteht sich auch, daß diese Kunststoffauskleidung 19 von der Kreisform abweichend gestaltet sein könnte, wenn statische bzw. mechanische Gründe dies erfordern. Die dargestellte Kunststoffauskleidung 19 wird im noch formbaren Zustand in das Metallrohr 16 eingezogen und dann mit einem nicht dargestellten Druckschlauch, der durch ein Druckmittel aufweitbar ist, an die Innenwandung des Metallrohres 16 angepreßt. Im Zusammenwirken mit den gegebenenfalls vorzunehmenden Aktivierungsmaßnahmen an der Anlagefläche des Metallrohres 16 läßt sich ein dauerhaft haltbarer Verbund zwischen Metall und Kunststoff schaffen.

Der aus Fig. 6 ersichtliche Verbundprofilstab nimmt im Hohlraum des Metallprofiles 20 einen Kunststoffstrang 21 auf, der in bezug auf seine Länge unterschiedlich dick ist. Dieser faserverstärkte Kunststoffstrang 21 ist dabei so gestaltet, daß seine Dicke ausgehend von den Endbereichen zum Mittelbereich hin zunimmt, so daß durch den Verbund des Kunststoffstranges 21 mit dem Metallprofil 20, beispielsweise ein Träger gleicher bzw. annähernd gleicher Biegesteifigkeit erzielt werden kann.

Wie bereits erwähnt, geben die dargestellten und vorbeschriebenen Ausführungsformen die Erfindung lediglich beispielsweise wieder, die keinesfalls allein darauf beschränkt ist. Es sind vielmehr noch mancherlei Änderungen und andere Ausgestaltungen der Erfindung denkbar. Insbesondere ist die Erfindung nicht an die Form der beiden Verbundprofilquerschnitte gebunden.

Bezugszeichenliste:

10 Verbundprofilstab
11 Hohlraum
12 Kunststoffstrang
13 Fasermaterial
14 Leichtmetallprofil
15 Verbundprofilstab
16 Metallrohr
17 Kunststoffstrang
18 Schlauch
19 Kunststoffauskleidung
20 Metallprofil
21 Kunststoffstrang

## Ansprüche

1.) Verfahren zur Herstellung eines Verbundprofilstabes aus Metall, insbesondere aus Aluminium oder Aluminiumlegierungen, und einem faserverstärkten Kunststoff,

**dadurch gekennzeichnet,**

daß in offene oder geschlossene Kammern der Metallprofilstäbe die mechanischen Eigenschaften steigernde Kunststoffe in noch formbarem Zustand eingebracht werden und dort ihre endgültige Lage und Form erhalten.

2.) Verfahren nach Anspruch 2, dadurch gekennzeichnet, daß die Kunststoffe mit Fasern, insbesondere Langfasern verstärkt sind, wobei die Fasern entsprechend der Beanspruchung des Metallprofilstabes verlaufen.

3.) Verfahren nach den Ansprüchen 1 und/oder 2, dadurch gekennzeichnet, daß die Kunststoffe Duro-oder Thermoplaste sind.

4.) Verfahren nach den Ansprüchen 1 bis 3, dadurch gekennzeichnet, daß der faserverstärkte Kunststoff durch Druckbeaufschlagung mit oder ohne Wärmezufuhr an die Innenwandung des Metallprofilstabes gepreßt wird.

5.) Verfahren nach den Ansprüchen 1 bis 4, dadurch gekennzeichnet, daß die in Anlage mit dem faserverstärkten Kunststoff bringbaren Flächen des Metallprofilstabes zur Erhöhung der Schubfestigkeit der Metall-Kunststoff-Grenzschicht mechanisch oder chemisch aktiviert werden.

6.) Verfahren nach den Ansprüchen 1 bis 5, dadurch gekennzeichnet, daß die Druckbeaufschlagung über die Länge des Metallprofilstabes mittels eines Druckschlauches oder Drucksackes aufgebracht wird.

7.) Verfahren nach Anspruch 6, dadurch gekennzeichnet, daß ein Druckschlauch oder Drucksack mit nicht konstanter Wanddicke verwendet wird.

8.) Verfahren nach den Ansprüchen 6 und 7, dadurch gekennzeichnet, daß zur Entfernung überschüssigen Harzes die Wanddicke des Druckschlauches oder Drucksackes von der Mitte zu den Enden hin zunimmt.

9.) Verfahren nach den Ansprüchen 2, 6 und 7, dadurch gekennzeichnet, daß zur Erzielung unterschiedlicher Wanddicken der faserverstärkten Kunststoffe ein Druckschlauch oder Drucksack mit über die Länge und/oder den Umfang unterschiedliche Wanddicken verwendet wird.

10.) Verfahren nach den Ansprüchen 1 bis 9, dadurch gekennzeichnet, daß der Metallprofilstab mitsamt dem noch formbaren faserverstärkten Kunststoff spanlos verformt wird.

*Jul. & Aug.Erbslöh*

FIG.1

FIG.2

FIG. 3

FIG.4

FIG.6

20

21

FIG.5

16

19

Jul. & Aug. Erbslöh